# EUROPEAN PATENT APPLICATION

(11) **EP 0 935 383 A1**
(43) Date of publication of application: **11.08.1999**
(21) Application number: 98309257.8
(22) Date of filing: 12.11.1998
(51) Int. Cl.: H04N 1/10

(54) **Notetaking and recording apparatus, system and process**

(30) Priority: 26.01.1998 US 13778
(71) Applicant: Abera Systems Corporation, Chupei City, Hsinchu Hsien (TW)
(72) Inventor: Liang, Leo C., Chupei City, Hsinchu Hsien (TW); Lee, William W., Chupei City, Hsinchu Hsien (TW); Wang, Bobo, Chupei City, Hsinchu Hsien (TW)
(74) Representative: Piésold, Alexander J.

(57) **Abstract**

A notetaking device comprises a base member having an image support surface disposed for ready access for handwriting and viewing image information thereon and for receiving a document having pre-existing image information. A writing pad is disposed in a writing position on the image support surface for receiving handwritten image information. An image sensor bar is supported on the base member for movement in the length dimension of the image support surface, adjacent to the writing pad supported in said writing position. The image sensor bar has an elongated dimension extending across at least a substantial portion of the width dimension of the support surface. A plurality of image sensing devices are disposed along the elongated dimension of said image sensor bar and are directed to sense an image on the writing surface of the writing pad, width-section-by-width-section (or line-by-line), as the image sensor bar moves along the length dimension of the writing surface. The image sensing devices provide image signals representative of each width section of the sensed image. Processing electronics, including data storage memory, are operatively coupled to the image sensing devices to receive the image signals and store data representing the image signals in the data storage memory.

## Description

The present invention relates, generally, to an apparatus, system and process for electronic recordal of image information and in preferred embodiments, to a notetaking and recording apparatus, system and process for paperless notetaking, digitization and recording of notes and other image information for uploading to a host computer, facsimile transmission, internet transmission, or the like.

While computer technology has provided a variety of input mechanisms (keyboards, touchscreens, pointers, and the like) for users to input and record information in a computer, there are many contexts in which a person may prefer to record information in handwritten form or to record pre-existing images. For example, handwritten notes may be preferred for places where it is impractical to carry conventional computer input devices or for people who are simply more comfortable with taking handwritten notes on a writing surface instead of using conventional electronic input devices. In many contexts, a simple, portable writing surface, such as a paper sheet supported by a rigid backing may be preferred, for example, in a classroom, lecture hall, meeting, interview or while covering a news event, taking a food order, conducting an inspection, writing a prescription or similar contexts. However, paper documents can be easily damaged and do not provide the versatility of electronically recorded data.

Electronic writing pads have been developed, which connect to a host computer and allow a user to hand-write images (alphanumeric characters, symbols, diagrams, designs or other images) on an electronic writing surface with a writing implement, such as an electronic pen or a pressure pen. Sensing electronics located under substantially the entire extent of the electronic writing surface operate to sense hand drawn image information on every portion of the writing surface. Processing electronics provide image data which represents image information sensed by the sensing electronics and provides the image data to the host computer for further processing or storage. Because such electronic writing pad devices require connection to a computer, these devices can be impractical for multipurpose, portable notetaking applications. In addition, many of these devices require the user to view the image being drawn on a display monitor, while moving a writing implement (electronic pen or pressure pen) across the writing surface. Because the viewable image is not formed on the writing surface, such devices can be relatively cumbersome to use.

On the other hand, some portable electronic writing pads, such as the Newton™ (a trademark of Apple Computer, Inc.) allow a user to hand write image information on the same writing surface which also displays an image corresponding to the handwritten information. As with the above-discussed electronic writing pads, sensing electronics located under substantially the entire extent of the writing surface operate to sense hand drawn image information on every portion of the writing surface. Processing electronics provide image data which represents image information sensed by the sensing electronics and record the image data in a data storage memory. The recorded data may be uploaded to an external processor, such as a personal computer, for further processing or recording.

However, because such portable electronic writing pads employ sensing electronics and a display mechanism located under substantially the entire extent of the writing surface, the size of the writing pads surface can significantly affect the overall complexity and cost of the product. Accordingly, the writing surfaces on such portable devices are typically relatively small. Also, even though an image is displayed directly on the writing surface, electronic writing pads and electronic pens can still be relatively cumbersome to a person who is not familiar with using those devices. Furthermore, while the above-described electronic writing pads can record image information that is hand-drawn by a user on a writing surface, such electronic writing pads are not capable of recording pre-existing image information, such as images on business cards, pre-printed sheets of paper, photographs, or the like.

Documents having image information can be digitized and electronically recorded by conventional telefacsimile machines or scanners, for uploading into a host computer. However, many conventional telefacsimile machine and scanner designs require the image-bearing document to be fed into a document feeder, placed image-face-down on a transparent platen surface or otherwise disposed in a position in which it is impossible or impractical to write on or view the image surface of the document. In addition, many conventional telefacsimile machines and scanners employ large arrays of sensors, such as charge coupled devices (CCDs), and associated optical devices, often mounted on a moveable carriage within in a relatively bulky housing. Hand-held scanners typically require connection to an external computer during scanning and can be impractical for quickly scanning full page images. Accordingly, such conventional scanners are not designed to be practical, multi-purpose note-taking tools and many are impractical for portable applications.

Typical electronic white boards, which are also capable of recording hand-generated images, have many of the same traits that render the above-discussed devices impractical as multi-purpose note-taking tools. Accordingly, there is a need in the industry for a practical, multipurpose notetaking apparatus which avoids the above-noted deficiencies 68731.602 associated with various conventional devices. There is also a need in the industry for a multipurpose, portable image recording apparatus capable of electronically recording handwritten images and images on existing image-bearing documents, and which also avoids the above-noted deficiencies associated with various conventional devices.

According to a broad aspect, the present invention provides a notetaking device for recording information handwritten by a user, the device comprising:
a writing pad having a writing surface for receiving and displaying handwritten images;
a base assembly having an image support surface for supporting the writing pad in a writing position, with said writing surface facing upward and positioned for ready access for handwriting and viewing by the user, the image support surface defining a width dimension and a length dimension;
an image sensor bar supported on the base assembly for movement in the length dimension of the image support surface, adjacent to the writing pad supported in said writing position, the image sensor bar defining an elongated dimension extending across at least a substantial portion of the width dimension of the support surface;
a plurality of image sensing devices disposed along the elongated dimension of said image sensor bar and directed to sense an image on the writing surface of the writing pad, width-section-by-width-section, as the image sensor bar moves adjacent to the writing surface, said image sensing devices providing image signals representative of each width section of the sensed image; and
processing electronics including data storage memory operatively coupled to said image sensing devices to receive said image signals and store data representing said image signals in said data storage memory.

In preferred embodiments there is provided:
a practical, multipurpose, portable image recording system, apparatus and process for digitizing and electronically recording handwritten and preprinted documents (including photographs);
a practical, multipurpose, portable electronic notetaking system, apparatus and process which provides ready access for handwriting and viewing image information on a writing surface, and which is capable of recording image information on the writing surface;
such a notetaking system, apparatus and process which is readily adaptable for right-handed and left-handed use;
such a system, apparatus and process which has a relatively simple, cost efficient, and durable design;
an image recording system which includes a writing surface and an image sensor array supportable on the writing surface for sensing image information on the writing surface and selectively removable from the writing surface for sensing image information located off of the writing surface; and
an image recording system which includes a writing surface and is supportable with the writing surface arranged vertically for displaying image information on the writing surface.

According to a preferred embodiment of the present invention, a notetaking device comprises a base member having an image support surface disposed for ready access for handwriting and viewing image information thereon and for receiving a document having pre-existing image information. In preferred embodiments, a writing pad is disposed in a writing position on the image support surface for receiving handwritten image information. An image sensor bar is supported on the base member for movement in the length dimension of the image support surface, adjacent to the writing pad supported in said writing position. The image sensor bar has an elongated dimension extending across at least a substantial portion of the width dimension of the support surface. A plurality of image sensing devices are disposed along the elongated dimension of said image sensor bar and are directed to sense an image on the writing surface of the writing pad, width-section-by- width-section (or line-by-line), as the image sensor bar moves along the length dimension of the writing surface. The image sensing devices provide image signals representative of each width section of the sensed image. Processing electronics, including data storage memory, are operatively coupled to the image sensing devices to receive the image signals and store data representing the image signals in the data storage memory.

Some preferred embodiments of the invention will now be described by way of example only and with reference to the accompanying drawings, in which:
Fig. 1 is a system diagram representing a notetaking and recording system according to a preferred embodiment of the present invention.
Fig. 2 is a perspective view of a notetaking and recording apparatus according to a first and second preferred embodiment of the present invention.
Fig. 3 is a top view of the notetaking and recording apparatus of Fig. 2.
Fig. 4 is a side view of the notetaking and recording apparatus of Fig. 2.
Fig. 5 is a block diagram of various electronics associated with the apparatus of the first embodiment of the present invention.
Fig. 6 is a perspective view of a notetaking and recording apparatus according to a third preferred embodiment of the present invention.
Fig. 7 is a top view of the notetaking and recording apparatus of Fig. 6.
Fig. 8 is a side, cross-section view of the notetaking and recording apparatus of Fig. 6.
Fig. 9 is a perspective view of an image sensor bar removed from the base member of the apparatus of Fig. 6.
Fig. 10 is a side view of a notetaking and recording apparatus according to a fourth preferred embodiment of the present invention.
Fig. 11 is a side view of the apparatus of Fig. 10, with the image sensor bar in a raised position.
Fig. 12 is a perspective view of a notetaking and recording apparatus according to a fifth preferred embodiment of the present invention, when supported in a portrait mode.
Fig. 13 is a perspective view of a notetaking and recording apparatus according to the fifth preferred embodiment of the present invention, when supported in a landscape mode.
Fig. 14 is a block diagram representation of an image sensor bar employed with a fifth embodiment of the present invention.

In the following description, reference is made to the accompanying drawings which form a part hereof, and which are shown, by way of illustration, several embodiments of the present invention. It is understood that other embodiments may be utilized and structural changes may be made without departing from the scope of the present invention.

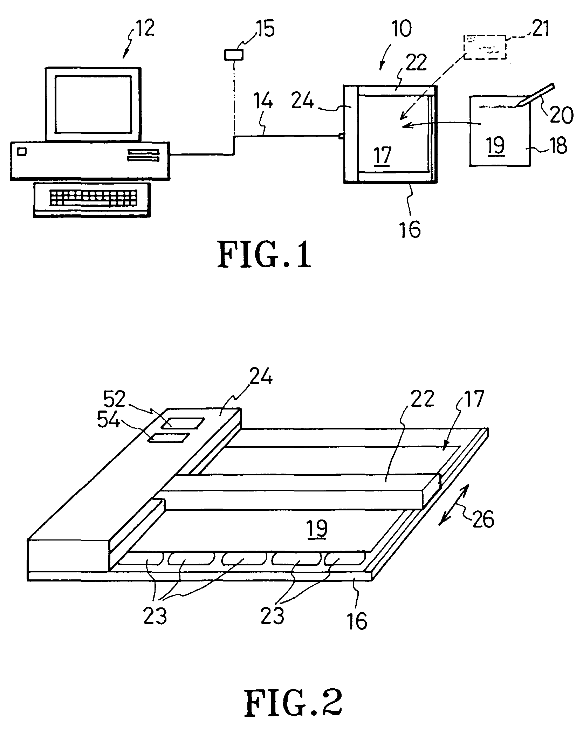

As noted above, the present invention relates generally to an apparatus, system and process for electronic recordation of image information and in preferred embodiments, to a notetaking and recording apparatus, system and process which provides a readily accessible notetaking surface and means for electronically recording images on the notetaking surface, but without the disadvantages associated with conventional devices. Various embodiments of notetaking and recording apparatuses are described herein with reference to Figs. 2-13. System embodiments involve a system comprising a notetaking and recording apparatus according to an embodiment of the present invention (such as an embodiment shown in Figs. 2-13), a computer and a communications link therebetween.

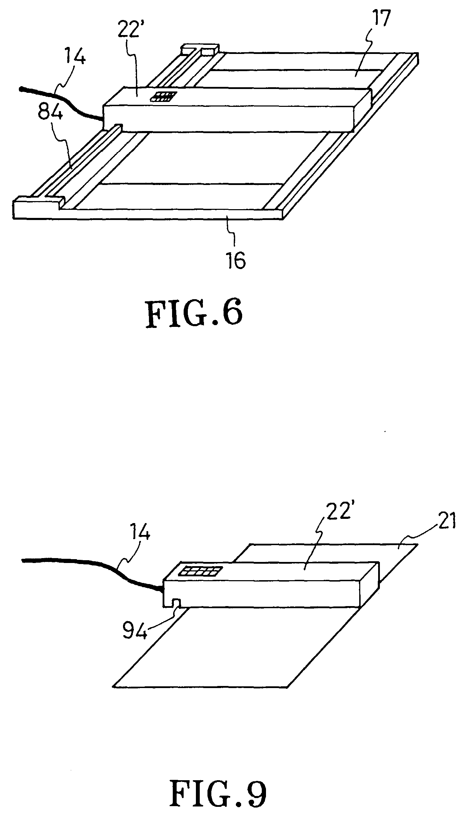

A system according to an embodiment of the present invention is represented in the generalized system diagram of Fig. 1, which includes a notetaking and recording apparatus 10, a host computer 12 located external to the apparatus 10 and a communications link 14 between the apparatus 10 and the computer 12. The system embodiment in Fig. 1 is shown with a notetaking and recording apparatus 10 according to a first embodiment of the present invention, which is described in further detail with respect to Figs. 2-5. However, other system embodiments may employ a notetaking and recording apparatus 10 according to further embodiments of the present invention, for example, as described herein with reference to Figs. 6-13.

As described in more detail below, the notetaking and recording apparatus 10 is capable of sensing image information, including hand-written notes, and storing image data representing the sensed image information. In preferred embodiments, the apparatus 10 is provided with a writing pad 18 having a writing surface 19 for receiving handwritten image information. The apparatus 10 also includes image sensing means 22 capable of sensing handwritten image information written on the writing surface 19 as well as image information on documents 21. The apparatus 10 further includes data storage means for storing image data representing the sensed image information and a communication port connectable, through a communications link 14, to the host computer 12 (or to other suitable image data communication or processing device, such as a telefacsimile machine or to a network or internet terminal, or the like).

The computer 12 comprises any suitable programmable data processor and communications interface, such as a personal computer, mainframe computer or other computer means, programmed to receive and process image data signals and store image data corresponding to the received image data signals. In some preferred embodiments described herein, the computer 12 is also programmed to provide programming signals or data to the apparatus 10, through the communications link 14. The illustrated computer 12 includes a display device for displaying images corresponding to the received image data signals.

As described in more detail below, in some preferred embodiments, the apparatus 10 is capable of disconnecting from the computer 12, for portable handwriting and image recording operation, remote from the computer, and need only be connected to a computer 12 to upload signals representing stored image data from the apparatus 10 to the computer 12 or to receive programming signals or data from the computer 12. In this regard, the communications link 14 between the computer 12 and the apparatus 10 shown in Fig. 1 may comprise, for example, an electrical conductor cable composed of a plurality of electrical conductors and having a connector 15 on at least one end, capable of readily connecting and disconnecting the computer 12 to data and power ports on the apparatus 10. In Fig. 1, a connector 15 and cable end are shown in broken lines, disconnected from the apparatus 10 and are shown in solid lines, in a connected state. While the illustrated embodiment employs a conductor cable, the communications link 14 in further embodiments may be any suitable means for communicating data and, in some embodiments, for communicating data and power, including, but not limited to, another form of a hard wire link, an optical link, a wireless electromagnetic link, a hybrid link, or the like. For example, suitable wire or cable interfaces include, but are not limited to, an Universal Serial Bus (USB), Enhanced Parallel Port/Extended Capability Port IEEE1284 (EPP/ECP), IEEE 1394 Fire Wire, or the like. Suitable wireless interfaces may include, but are not limited to infra red (irDA) and radio frequency (RF) interfaces, or the like.

A notetaking and recording apparatus 10 according to a first preferred embodiment of the present invention is described herein with reference to Figs. 1-5. The apparatus 10 includes a base member 16, having an image support surface 17 for supporting (or itself defining) a writing pad 18 in a position for ready access for handwriting image information to be recorded. The writing pad 18 has a writing surface 19 on which image information (alphanumeric characters, symbols, diagrams, designs or other images) may be hand-generated, using a suitable writing implement 20. The support surface 17 (or the writing pad surface 19) may also support a document 21 (such as a photograph, business card, receipt, printed advertisement, or other document) with a pre-existing image to be recorded.

The apparatus 10 also includes a moveable image sensor bar 22, supported for movement adjacent the image support surface 17. As described in more detail below, the image sensor bar 22 is moveable from a rest position at the top border area of the image support surface (as shown in Fig. 1), toward the bottom border area of the image support surface, and back to the rest position. Suitable image sensing means are provided on the image sensor bar 22, for sensing image information handwritten on the writing pad 18 or otherwise disposed on the image support surface 17, as the bar is moved adjacent the image support surface. Various electronics and mechanics associated with the image sensor bar functions are contained in a housing 24, which is supported on the base member 16 adjacent to the image support surface 17.

In preferred embodiments, the base member 16 is formed of a suitably rigid, light-weight material, such as plastic, metal, composite material or the like, for supporting a writing pad and other components of the apparatus, and defines a relatively thin, flat overall configuration suitable for ready storage and portability. The illustrated base member 16 has a generally planar bottom surface which allows the apparatus to be placed, bottom-surface-down, on a flat surface (for example, a desk top or table top) or held in a users hand or lap, with the image support surface 17 facing upward and readily accessible for handwriting and viewing by the user. The configuration of the base member 16 may be designed to resemble, to some extent, the size and shape of a standard clip-board or notebook backing, with the image support surface 17 having a size and shape to support a standard size sheet of paper, including but not limited to 8.5 by 11 inch sheets, A4 or A6 size sheets, legal sized sheets, or C, D or E size sheets. In this regard, a person familiar with and capable of generating hand-written information on, for example, a sheet of paper supported on a clip-board or in a notebook, would be readily capable of generating hand-written notes (or other image information) on the writing surface 19. Alternatively, the base member 16 may be of a smaller shape, for example, wallet size, to fit in a user's pocket or purse. Other suitable base member shapes and sizes will be apparent to those skilled in the art.

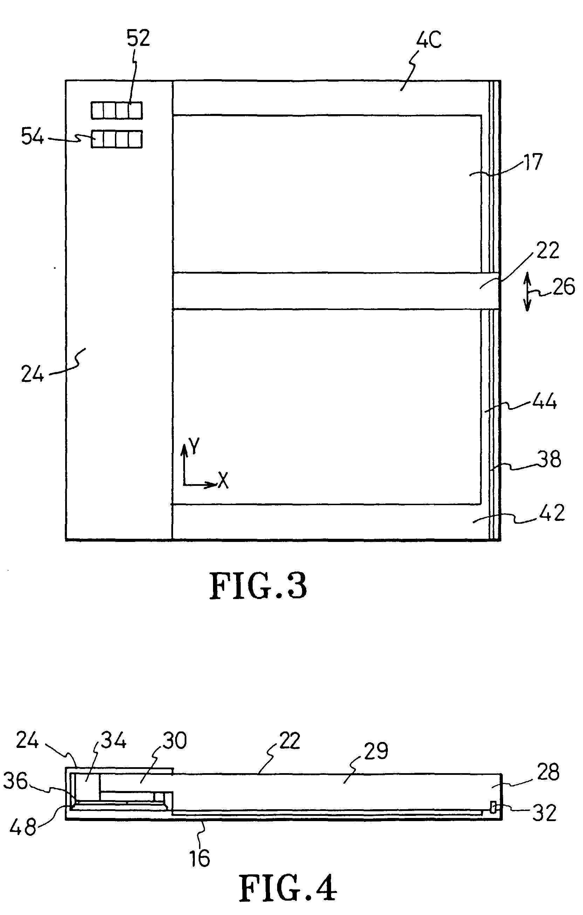

The image support surface 17 is a generally planar surface on which a writing pad 18 may be supported, with the writing surface 19 facing upward and accessible for handwriting and viewing. Alternatively, the image support surface 17 itself may be the writing surface 19. The planar image support surface 17 extends in two dimensions which, for purposes of simplifying the present disclosure, are referred to herein as dimension X (the width dimension of the surface 17 shown in Fig. 3) and dimension Y (the length dimension of the surface 17 shown in Fig. 3). The image support surface 17 may be slightly recessed with respect to the border areas of the upward facing surface of the base member 16 surrounding the image support surface. In that regard, the writing pad 18 may be supported within the recess, with the writing surface 19 substantially flush (or slightly recessed) with respect to the upward facing surface of the base member. In addition or as an alternative to supporting a writing pad 18, the support surface 17 may support other documents for recording (such as represented at 21 in Fig. 1). In this regard, the image support surface 17 may be recessed, for example, up to about 2 mm to hold a writing pad or other document with the image-bearing surface of the pad or document substantially flush with, or slightly recessed relative to, the border areas of the base member 16. In addition, a transparent plastic sheet may be provided to cover the image-bearing surface of a document placed on the image support surface 17 for recording, to hold the document flat against the image support surface (or an underlying writing pad surface) and to define a smooth, planar upward-facing surface over which the image sensor bar is moved during an image recording operation.

In preferred paperless embodiments, the writing pad 18 (or the image support surface 17) defines an erasable, reusable writing surface 19, on which a user may hand write and view erasable images with a corresponding writing implement 20. For example, the surface 19 may be a whiteboard surface or other generally non-porous, planar surface, such as a plastic, vinyl or other suitable material such as used in typical white-board devices, and the writing implement 20 may be an ink pen, such as used in conventional whiteboard devices. In such embodiments, a user may hand write image information on the writing surface and may wipe the image information from the writing surface with a wiping implement (eraser pad, towel, or the like).

In further preferred embodiments, a plurality of such paperless, erasable writing surfaces are provided in the form of, for example, a plurality of sheets of such writing surface material, wherein one sheet may define an opaque (for example, white) writing surface which is free of any pre-printed pattern and other sheets may define writing surfaces provided with preprinted patterns (such as a grid pattern, a pattern of writing lines, a preprinted form, a chart, a table or the like). One of the sheets may be transparent, and may be used to cover an image-bearing document 21, placed on the image support surface 17, as described below. A user may select one sheet and dispose the selected sheet on the image support surface 17, with the writing surface for that sheet (and any pre-printed patterns on that writing surface) facing upward and readily accessible to the user for handwriting and viewing image information thereon. In one preferred arrangement, as shown in Fig. 2, the plurality of sheets of writing surface material are arranged in a stack supported on the image support surface 17, with the selected sheet on the top of stack. Each sheet may be provided with a tab or ear 23 extending from one sheet edge (e.g., the bottom edge shown in Fig. 2), and the tabs or ears 23 may be staggered from sheet-to-sheet in the stack, so that each tab or ear is viewable, when the sheets are stacked. A user may, thereby, identify a desired sheet from, for example, indicia printed on the tabs, and then may pull the desired sheet from the stack and place it on top of the stack for a handwriting operation.

Further paperless embodiments may employ other suitable paperless writing surfaces, capable of receiving and displaying erasable, handwritten images, including, but not limited to electronic writing pads, chalk board pads, or the like. An electronic writing pad may include, for example, an optical, magnetic or pressure sensitive surface which responds to an electronic or magnetic pen or to the pressure of a pen tip during handwriting, and displays a visual representation of the handwritten image on the writing surface.

In yet further preferred embodiments, the writing pad 18 comprises a pad of writing paper having at least one sheet (and, more preferably, a plurality of sheets) of standard writing paper and the writing implement 20 comprises a standard writing pen, pencil or the like. A paper writing pad 18 may be preferred, for example, in contexts in which a paper record of the image information, as well as an electronic record, is desired or in contexts in which the user prefers a paper writing surface over other types of writing surfaces.

The moveable image sensor bar 22 comprises a generally rigid, bar-shaped member which has an elongated dimension positioned to extend across the width dimension X of the image support surface 17. The image sensor bar 22 is supported for movement relative to the image support surface 17, in the length dimension Y of the image support surface 17, as represented by the arrow 26. In one embodiment, the image sensor bar 22 defines a first end 28, a sensor section 29 and an extension section 30, wherein the sensor section 29 is located between the first end 28 and the extension section 30 (Fig. 4). The sensor section 29 spans substantially the entire width dimension X of the image support surface 17, while the extension section 30 extends from the sensor section, into the housing 24. As described below, the housing 24 extends along the length dimension Y of the image support surface 17 and is provided with an opening through which the extension section 30 of the image sensor bar 22 extends during its motion in the Y dimension.

A plurality of sensors are supported along the elongated dimension of the sensor section 29 of the image sensor bar 22 and are directed to sense images on the image support surface 17, as the image sensor bar 22 is moved along the length dimension Y of the image support surface. The image sensors are arranged such that, at any given position of the image sensor bar 22 in the Y dimension of the surface 17, the image sensors sense image information in an area spanning an entire width dimension X of the image support surface 17, but only a fraction of the length dimension Y of the surface 17. If each width section is referred to as a "line" of the image information on the image support surface 17, then, as the image sensor bar 22 is moved across the length dimension Y of the image support surface 17, the array of sensors sense image information on the surface 17, width-section-by-width-section or line-by-line.

In preferred embodiments, the plurality of image sensors comprises an array of contact image sensors (CISs) having at least one integrated light source. With CIS technology, the image sensor bar 22 may be made relatively small, light-weight and cost efficient. However, alternative embodiments may employ other suitable sensors, including, but not limited to charge coupled devices (CCDs), or the like. Examples of suitable CIS array devices that may be supported on or mounted in the image sensor bar 22 include, but are not limited to, the devices identified in the following table:

| MANUFACTURER | MODEL/PART No's. | REMARK |
|---|---|---|
| Canon | CXB-30216C-000 | Color Contact Image Sensor (A-4 size, 300dpi) |
| | CWB-30216G-000 | Color Contact Image Sensor (A-4 size, 300dpi) |
| Dyna Image Corporation | DL407-02CB | Color Contact Image Sensor (A-4 size, 300dpi) |
| | DL507-15UA | Color Contact Image Sensor (A-4 size, 300dpi) |
| Mitsubishi | G3R2216M | Color Contact Image Sensor (A-4 size, 300dpi) |
| Rohm | IG3008-ZF09 | Color Contact Image Sensor (A-4 size, 300dpi) |
| | IA3008-ZE39 | Color Contact Image Sensor (A-4 size, 300dpi) |
| Toshiba | CIPS218MC301 | Color Contact Image Sensor (A-4 size. 300dpi) |

The image sensor bar 22 is supported to ride adjacent (either on or slightly spaced from) the image support surface 17 and any writing pad or image carrying sheet disposed on the surface 17, as the image sensor bar moves in the direction of arrow 26. The image sensor bar 22 is supported and guided (and, in some embodiments, is driven) for movement in the length dimension Y of the image support surface 17 (in the directions of arrow 26), by suitable transport mechanism and guide structures.

One preferred embodiment of a transport mechanism and guide structure employs at least one first roller 32 mounted at the first end 28 of the image sensor bar 22, for engaging a surface portion of the base member 16 and supporting the first bar end 28 relative to the support surface 17. Each first roller 32 is positioned for rolling movement adjacent and along a first length dimension Y edge (the right edge in Figs. 2 and 3) of the image support surface 17. The opposite end of the image sensor bar 22 may be similarly supported and guided by a transport mechanism and guide structure 34, such as at least one second roller, preferably mounted on the extension section 30 of the bar, beyond the left width edge of the support surface 17. A platform 36 may be provided for supporting the transport mechanism and guide structure 34. For example, the platform 36 may include a rolling surface that extends adjacent a second length dimension Y edge (the left edge in Figs. 2 and 3) of the image support surface 17, for supporting the second roller(s).

Alternatively, or in addition to first and/or second rollers, the transport mechanism and guide structure 34 may comprise a wire and gear based mechanism, a timing belt and gear based mechanism or the like. In one preferred embodiment, a roller 32 is provided to support the first end 28 of the image sensor bar 22 and a belt and gear arrangement is provided in the housing 24, to support the extension end 30 of the image sensor bar.

In preferred embodiments that employ one or more rollers, a rail or groove may be provided on or formed in each surface engaged by a roller, to further guide the movement of the image sensor bar 22. For example, a first groove 38 is shown in Figs. 3 and 4, for engaging the first roller(s) 32. A similar groove may be provided on the roller surface of the platform 36 for engaging the second roller(s). Further embodiments may employ sliders in place of one or both of said first and second rollers, for sliding along the respective engaged surfaces, grooves, rails or the like. In yet further preferred embodiments, the rails or grooves and rollers or sliders may be configured such that the rollers are retained within the rails or grooves and are inhibited from becoming disengaged from the rails or grooves.

As described above, the image sensor bar 22 may be moved in the Y dimension of the image support surface, by applying a force in the direction of arrow 26 on the bar, to cause the first and second rollers to roll along their respective engaged surfaces (or to effect movement of other transport mechanisms), in the Y dimension of the image support surface. In some preferred embodiments, the image sensor bar 22 is supported such that a user may apply a manual force, by hand, to move the sensor bar 22. In other preferred embodiments, a suitable motor may be disposed within the housing 24 or mounted to the image sensing bar 22, for driving the bar in the Y dimension. For example, in embodiments in which the transport mechanism 34 comprises a gear and belt arrangement or a wire and gear arrangement, one of the gear and belt or wire may be driven by the motor to effect movement of the image sensor bar in accordance with well known mechanical properties of gear and belt transport mechanisms. In embodiments employing one or more rollers to support the image sensor bar 22, the bar may be provided with a motor for driving a roller to effect movement of the image sensor bar.

It will be understood that further embodiments may employ other suitable mechanisms for moveable supporting the image sensing bar 22 on the base member 16, and for moving the bar in the Y dimension relative to the image support surface 17. Various mechanical structures suitable for supporting the image sensing bar 22 and moving the bar 22 are within the level of knowledge and skill of one of ordinary skill in the art.

In the illustrated embodiment, the base member 16 defines border areas surrounding the image support surface 17. With reference to the orientation of the apparatus 10 shown in Fig. 3, the border areas include a top border area 40, a bottom border area 42, a first side border area 44 and a second side border area on which the housing 24 is disposed. In preferred embodiments, the image sensing bar is moveable between a rest position, in which it is disposed directly adjacent the top border area 40 (such as shown in Fig. 1), toward the bottom border area 42. In Figs. 2 and 3, the image sensor bar 22 is shown in a position directly adjacent the image support surface 17, during its motion between the rest position and the bottom border area.

When in the rest position, the image sensor bar 22 is disposed adjacent the top border area 42 and is substantially offset from the image support surface 17. With the image sensor bar 22 disposed in the top border area 40 and the housing 24 disposed in a side border area, laterally offset from the image support surface 17, the image support surface is readily accessible for handwriting. In this regard, when a writing pad is supported on the image support surface 17, a user may readily grip a writing implement in one hand and hand-generate image information on the writing surface 19 of the writing pad, without the housing 24 or image sensor bar 22 obstructing the user's writing hand. For right-handed users, the housing 24 should be disposed to the left side of the image support surface, when the image sensor bar 22 is disposed in the rest position adjacent the top border area 42. This arrangement maintains the right and lower sides of the image support surface 17 free of obstructions and allows the user's writing hand and arm to freely move along the writing surface. For left-handed users, the housing 24 should be disposed to the right side of the image support surface 17, so that the left side of that surface remains free of obstructions.

Preferred embodiments of the apparatus 10 are designed for both right-handed and left-handed operation. In such preferred embodiments, the apparatus 10 may be selectively programmed to recognize the top border area 40 as the rest position of the image sensor bar 22 for right-handed operation, and to recognize the bottom border area 42 as the rest position of the image sensor bar 22 for left-handed operation. More particularly, the apparatus shown in Fig. 3 may be converted to accommodate left-handed writing by simply moving the image sensor bar 22 to a second rest position directly adjacent the bottom border area 42, programming or setting the apparatus (as described below) to recognize the bottom border area as the rest position, and rotating the apparatus 180° such that the housing 24 is located to the right side of the image support surface 17 and the bottom border area 42 is located in the location of the top border area 40 of Fig. 3. This arrangement maintains the left and lower sides of the image support surface 17 free of obstructions and allows the left-handed user's writing hand and arm to freely move along the writing surface. As shown in Fig. 2, the connection part for the communications link 14 (and any other power link) is preferably located approximately in the middle of the elongated length dimension of the housing 24, to further minimize any obstruction to right handed or left handed handwriting.

The apparatus 10 includes suitable electronics (preferably, processor-controlled electronics) for controlling the operation of the image sensors on the image sensor bar, for storing data representing images sensed by the image sensors and for selectively uploading image data signals to a computer 12 and, in some embodiments, receive programming signals or data from the computer 12. In preferred embodiments, the apparatus 10 also includes a power source for providing power to the image sensors and electronics. Further, non-portable embodiments may include means for receiving power through the communication link 14 or other power input, when coupled to an external computer. In embodiments in which a motor is provided for driving the image sensor bar 22, the power source (or a second power source) further provides power to the sensor bar motor.

In preferred embodiments, the electronics and power source(s) are contained within the housing 24, located adjacent one side edge of the image support surface 17. As described above, this allows the image support surface 17 to remain free of obstructions and readily accessible for handwriting and viewing image information. This arrangement also allows the dimensions of the base member 16 and of the overall apparatus to be relatively thin and flat, similar to the shape and dimensions of a clip-board or notebook backing.

In the illustrated first embodiment, a circuit board 48, representing the above-noted electronics and a portable power source (such as a battery), are disposed within the housing 24, as shown in Fig. 4. Electrical communication between the image sensors on the moveable image sensor bar 22 and the electronics on the circuit board 48 may be accomplished, for example, through a multi-conductor cable (not shown) disposed within the housing 24, where the cable is provided with enough slack to allow the image sensor bar 22 to move through the full extent of its motion along the length dimension Y of the image support surface 17. Alternatively, such electrical communication may be accomplished by suitable conductive roller surfaces, brushes or the like (not shown), which engage conductive surfaces (not shown) within the housing, as the image sensor bar 22 is moved in the Y-dimension. Various electrical connection structures suitable for electrically connecting electronics on a moveable member, such as a moveable image sensing bar 22, to electronics located in a fixed position, such as an electrical circuit within the housing 24, are within the level of knowledge and skill of one of ordinary skill in the art.

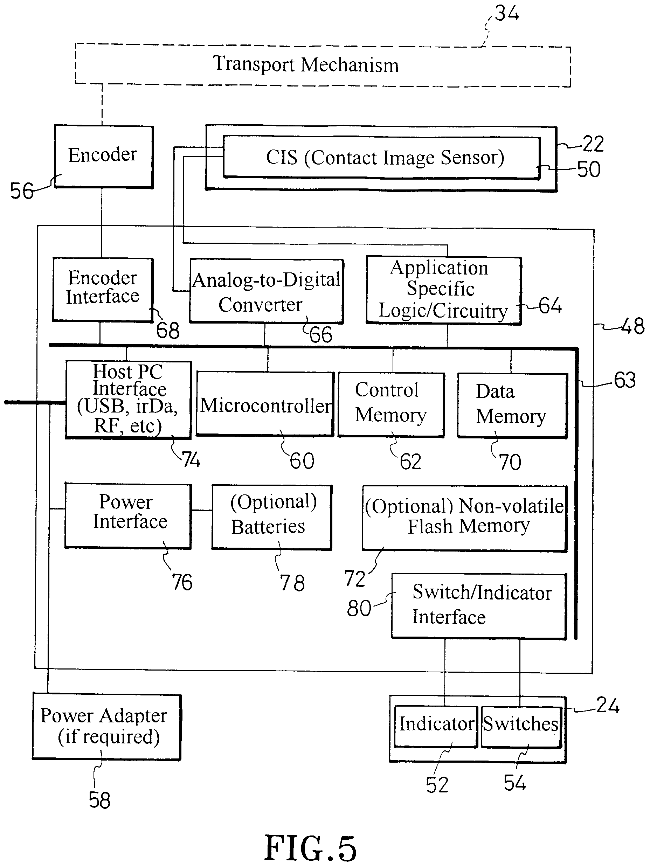

Fig. 5 is a block-diagram representation of a circuit board 48, and various other components of an apparatus 10 according to the first embodiment of the present invention. The circuit board 48 includes various electronics which operate with the array of image sensors 50 on the image sensor bar 22, indicators 52 and user-operable switches 54 disposed, for example, on an upward-facing surface of the housing 24, a transport mechanism 34, an encoder 56 and, in some embodiments, an external power source 58. The encoder 56 comprises any suitable mechanism for providing relative position data representing the position of the image sensor bar 22 (or the distance of movement of the image sensor bar from the rest position) in the Y dimension of the image support surface 17.

The encoder 56 may comprise, for example, a counter device for counting rotations of a roller, gear or pulley of the transport mechanism 34, the linear motion of a wire or drive belt, or the like, in accordance with well known position encoder technology. Alternatively, the encoder 56 may include a sensor disposed on the image sensing bar 22 for sensing an image or optical pattern (for example on the upper-facing surface of the base member 16 or the platform 36, or on an inside surface of the housing 24) and for providing a signal representing the sensed pattern. The pattern may be designed to cause the sensor to provide pulse signals at intervals along the Y dimension motion of the image sensor bar 22, which pulse signals may be counted or otherwise processed to track the position of the image sensor bar 22, relative to the rest position. Alternatively (or in addition) the pattern may be designed to cause the sensor to provide a distinct and different signal at each given position of the image sensor.

The circuit board 48 includes a processor-controlled circuit for receiving image data signals from the image sensor array 50 and sensor bar position data signals from the encoder 56, and storing image data that represents the received image signals. The circuit includes a processor 60, such as a microprocessor or microcontroller, which operates according to a program stored in a control memory 62 and which is connected with various other components on the circuit board, through a common communications bus 63 (or other suitable communication connection between various circuit components). The circuit board may be provided with an application specific logic circuit (ASLC) 64 coupled to the data bus 63 and the sensor array 50, for performing device-specific digital sequential functions, such as generating timing pulses for controlling the image sensors in the array 50, generating signals to control a motor for driving the image sensor bar 22, generating direction and line-distance information from signals provided by the encoder 56 and, for CIS sensor array embodiments, generating signals to turn on a light source integrated with the sensor array.

In the illustrated embodiment, analog image data signals from the sensor array 50 are communicated to and translated by an analog-to-digital converter (ADC) 66 on the circuit board 48. The circuit board 48 also includes an encoder interface 68 coupled to receive encoder signals (such as electrical pulse signals, counter signals corresponding to counted pulses or other suitable encoder data) from the encoder 56 and provide position data on bus 63, representing the position or movement of the image sensor bar 22, with respect to the rest position of the bar. In embodiments in which the image sensor bar 22 is driven by a motor, the encoder 56 and encoder interface 68 shown in Fig. 5 may be replaced by a motor and a motor interface, respectively, where the motor interface provides position data, based on the motor operation. For example, in one preferred embodiment, a stepper motor is provided for moving the image sensor bar 22, and pulses representing stepped motor movements (or a count of such pulses) are provided to the motor interface.

Under the control of the processor 60, the circuit operates to store data representing the image data signals received from the sensor array 50. As noted above, the sensor array 50 senses image information width-section-by-width-section (or line-by-line) during the sensor bar movement across the Y dimension of the image support surface. Accordingly, with sensor bar position data from the encoder interface 68, and with the pre-known location in the array of each sensor, the processor may be controlled to store image data for each sensed portion of an image, based on the location of the image portion on the image support surface. Image data for all portions of the image support surface may, therefore, be stored and later retrieved (for example, to upload to the computer 12) in an order dependent upon the location of each portion of the image support surface.

Image data may be stored in a volatile data memory 70, when the circuit is coupled to a power source (or to receive power from an external computer 12). In preferred embodiments, a non-volatile memory, such as a flash memory 72 is provided for storing image data for image information sensed when the apparatus 10 is not connected to an external power source 58 or computer 12, such as during portable, remote operation.

The circuit board 48 further includes a host computer interface 74, for coupling to a communications link 14 and interfacing with a computer 12, to provide image data signals representing image data stored in the data memory 70 or 72 to the computer 12 and, in some embodiments, to receive programming instructions or data from the computer 12. For example, in some embodiments, control instructions may be received from the computer 12, through the interface 74, to modify or alter the control program in control memory 62, for updating, enhancing or otherwise modifying the operation of the circuit. The computer interface may comprise, for example, a standard universal serial bus (USB), an EPP/ECP interface, an irDA-compatible wireless interface, or the like.

A power interface 76 is provided for coupling to an external power source 58 or, in some embodiments, to receive power from the communication link 14. In preferred embodiments, the power interface is coupled to a portable power source, such as batteries 78, for portable operation. The circuit board 48 also includes an interface 80 for the indicators 52 and switches 54. The switches 54 preferably include a user-operable switch for selectively activating and deactivating the image sensor array and sensing and recording electronics. In addition, the switches 54 preferably include a user-operable switch for activating a data transfer operation, to upload data from the data memory 70 or 72 to the host computer 12. Also in preferred embodiments, a user-operable switch is provided for selecting right-handed or left-handed operation. The right or left-handed operation switch position is employed, with the encoder data, for determining the position of the image sensor bar relative to either the right-handed or left-handed rest position of the image sensor bar. In motorized embodiments, a user-operable switch is provided to cause the image sensor bar motor to be activated (which may be incorporated in the switch for activating the image sensor array and sensing electronics).

The indicators preferably include an indicator for visually indicating the state of right or left-handed operation switch and an indicator for visually indicating the activation state of the electronics. In further preferred embodiments, an error/overflow indicator is provided for indicating an unsuccessful image sensing operation and that image sensing must be re-tried. Also, further preferred embodiments include a buffer full indicator for indicating that the on-board image data memory (70 or 72) is full and unable to store additional image data.

In an image recording operation, a user sets the switches 54 for right or left-handed operation, and positions the image sensor bar 22 in the appropriate rest position (as discussed above). A user may provide image information on the image support surface in a number of different manners, for example, by handwriting image information directly on the image support surface 17, by handwriting image information on a writing surface of a writing pad 18 or pre-printed writing surface sheet (e.g., having preprinted lines, grids or form data) disposed on the image support surface, or by placing a document having a pre-printed image to be sensed on the image support surface (image side up) with or without a transparent sheet covering. After handwriting image information on the writing surface (or otherwise disposing image information on the image support surface 17), the user activates the sensor array and electronics. The image sensor bar 22 is then moved in the Y dimension, across the image support surface, while the sensor array 50 senses image information on the image support surface and provides image data signals and while the encoder 56 provides image sensor bar position data signals to the circuit board 48. Under the control of the processor 60, image data signals are processed and image data corresponding to the image data signals is stored in data memory 70 or 72. Data may be uploaded from the data memory 70 or 72 to a computer 12 under the control of the processor 60 as well as the computer 12.

While the apparatus 10 described above with respect to the first preferred embodiment (as shown in Figs. 2-5) employs a circuit board 48 and associated electronics located within the housing 24, an apparatus 10 according to a second preferred embodiment is similar to the first embodiment, except that a circuit board (such as circuit board 48), associated electronics and portable power source (such as battery 78) are disposed within the image sensor bar 22. In further embodiments, the portable power source (such as battery 78) may be disposed within the housing 24, to minimize the size and weight of the image sensor bar 22.

An apparatus 10 according to a third embodiment of the present invention is shown in Figs. 6-9. The apparatus 10 in Figs. 6-9 includes a base member 16, an image support surface 17 on the base member and a moveable image sensor bar 22' which is supported on the base member for movement in the Y dimension, and which functions, in many respects, similar to the image sensor bar 22 discussed above, with respect to the first and second embodiments. However, the apparatus in Figs. 6-9 does not include a housing 24. Instead, first and second exposed roller tracks 80 and 82 are provided adjacent two opposite side edges of the image support surface 17 and extend along the length dimension Y of the image support surface. A guide rail 84 extends along the length dimension Y of the image support surface, adjacent to the first roller track 80. In the illustrated embodiment, the guide rail 84 comprises a rib on the upper-facing surface of the base member 16. Each end of the guide rail 84 is provided with a stopper 86 and 88.

The image sensor bar 22' in the third embodiment shown in Figs. 6-9 includes an image sensor array 50, a circuit board 48 and associated electronics, including a non-volatile memory 72 and a suitable portable power supply, such as a battery 78, similar to the image sensor bar 22 described above with respect to the second preferred embodiment. The image sensor bar 22', however, further includes a pair of friction rollers 90 and 92 for engaging and rolling on the roller tracks 80 and 82, respectively, and means for engaging the guide rail 84 for movement in the Y dimension along the guide rail, between stop members 86 and 88. One example of a suitable rail engaging means, as shown in the illustrated embodiment, includes a channel 94 for receiving the guide rail 84 and a set of opposed guide rollers 96 for engaging and rolling on opposed surfaces of the guide rail 84, when the guide rail is received in the channel 94. An encoder 56 (or, in motorized embodiments, an image sensor bar drive motor) may be operatively coupled to the friction rollers 90 and 92 and disposed within the image sensor bar 22', to operate similar to the encoder (or image sensor bar drive motor) described above.

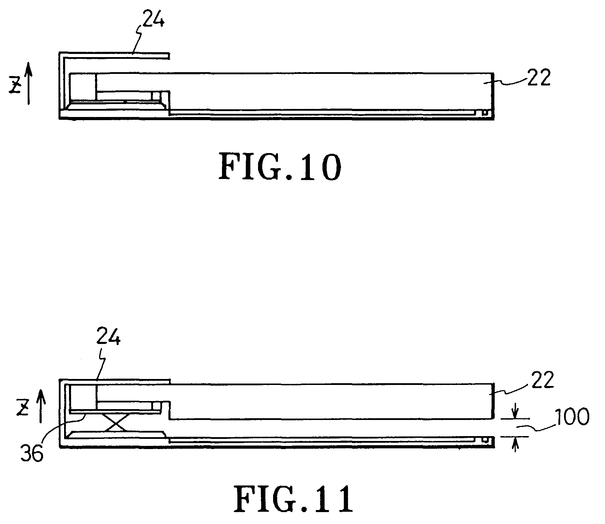

Switches and indicators, such as those described above with respect to switches 52 and indicators 54, are provided on the upward facing surface of the image sensor bar 22' shown in Figs. 6, 7 and 9. The image sensor bar 22' also includes a connection port for connecting to a computer link 14, similar to that described above. Because all of the apparatus electronics, user-operable switches and indicators are disposed in the image sensor bar 22', the image sensor bar 22' may be (and is preferably) designed to be removable from the base member 16 for image sensing or uploading operations, as shown in Fig. 9. In this regard, the image sensor bar 22' may be engaged with the guide rail 84 and roller surfaces 80 and 82, for sensing image information on the image support surface 17 in a manner similar to that described above with respect to the first and second preferred embodiments, or disengaged from the base member, for example, for sensing image information that is not on the image support surface 17, as shown in Fig. 9. Thus, image information on surfaces that could not be readily placed on the image support surface 17, such as a page of a book, could be sensed and recorded by simply removing the image sensor bar 22' off of the base member 16, and operating the bar as a hand-held scanner.

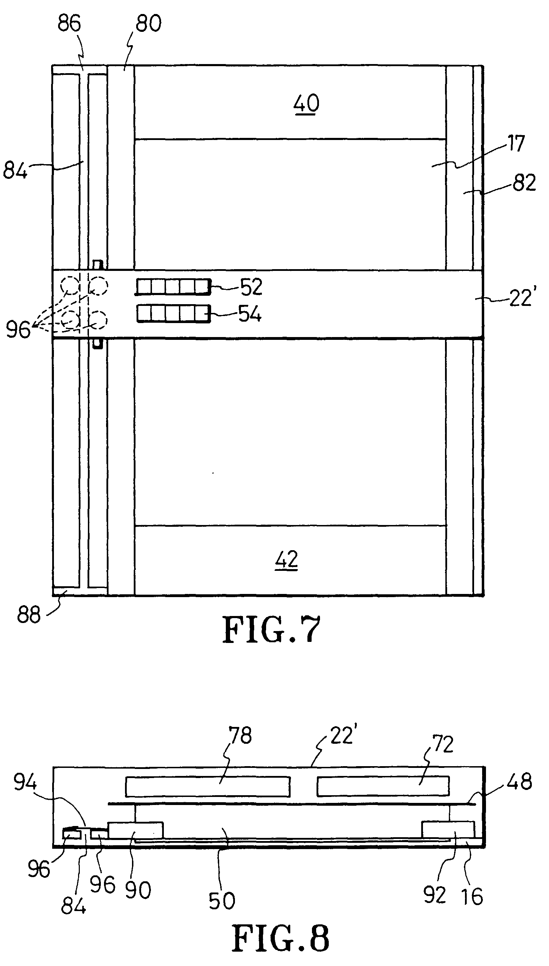

In preferred embodiments, the guide rail rollers 96 on the image sensor bar 22' abut and are urged against the guide rail 84, for example, by a spring mount (not shown), when the image sensor bar is engaged with the base member, as shown in Figs. 6 and 7. However, it is also preferred that the image sensor bar 22' be easily removable from the base member 16 for hand-held operation, as shown in Fig. 9. In one preferred configuration, a mechanism is provided to allow the user to selectively move the guide rollers 96 on one side of the guide rail 84 away from the guide rail surface (and/or release the spring tension of the spring mount), to allow the image sensor bar 22' to be easily lifted off of the base member 16, and to selectively move the guide rollers 96 back against the guide rail surface (and/or re-apply the spring tension), to allow the image sensor bar to be re-engaged with the base member.

An image sensing and recording apparatus according to a fourth preferred embodiment of the present invention is shown in Figs. 10 and 11. The fourth preferred embodiment may be similar to the first or second preferred embodiments, except that the housing 24 and platform 36 are configured to allow the image sensor bar 22 to be disposed in a plurality of positions in the Z dimension (the dimension perpendicular to the image support surface 17). In this regard, the spacing distance 100 between the image sensor bar 22 and the image support surface 17 may be adjusted for allowing thicker documents, books, or the like to be placed on the image support surface 17 for image sensing and recording. In Fig. 10, the image sensor bar 22 is shown in close proximity to the image support surface 17. In Fig. 11, the image sensor bar 22 is shown in a maximum spaced relation to the image support surface 17. In preferred embodiments, a suitable lift mechanism is provided for supporting the image sensor bar 22 in a plurality of selectable positions to define a plurality of selectable spacing distances 100. In one preferred configuration, the lift mechanism comprises a standard scissors lift coupled between the platform 36 and the base member 16, for selectively raising and lowering the image sensor bar 22 relative to the upward facing surface of the base member shown in Figs. 10 and 11. Further suitable mechanisms capable of selectively lifting and supporting the image sensor bar 22 in a plurality of positions in the Z dimension are within the knowledge and skill of one of ordinary skill in the art. It is noted that the image sensor bar 22 in the embodiments shown in Figs. 10 and 11 is fully supported on the housing 24 side of the bar, for movement in the Y dimension.

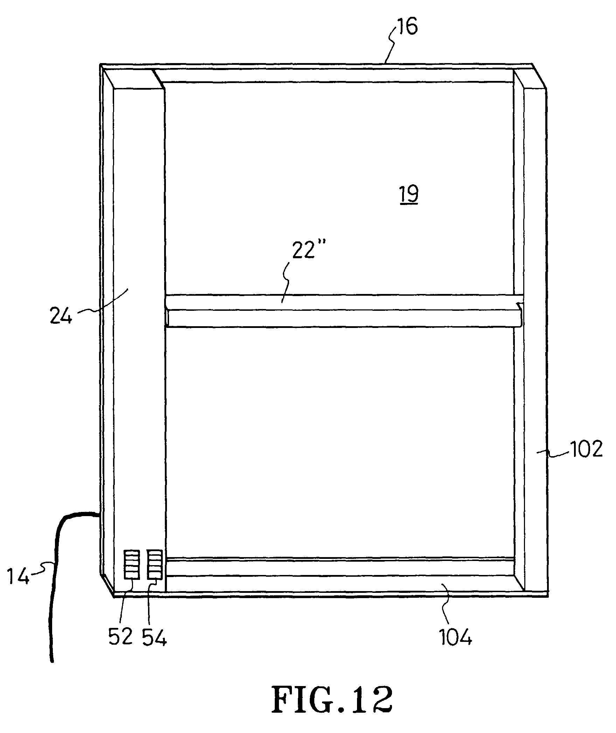

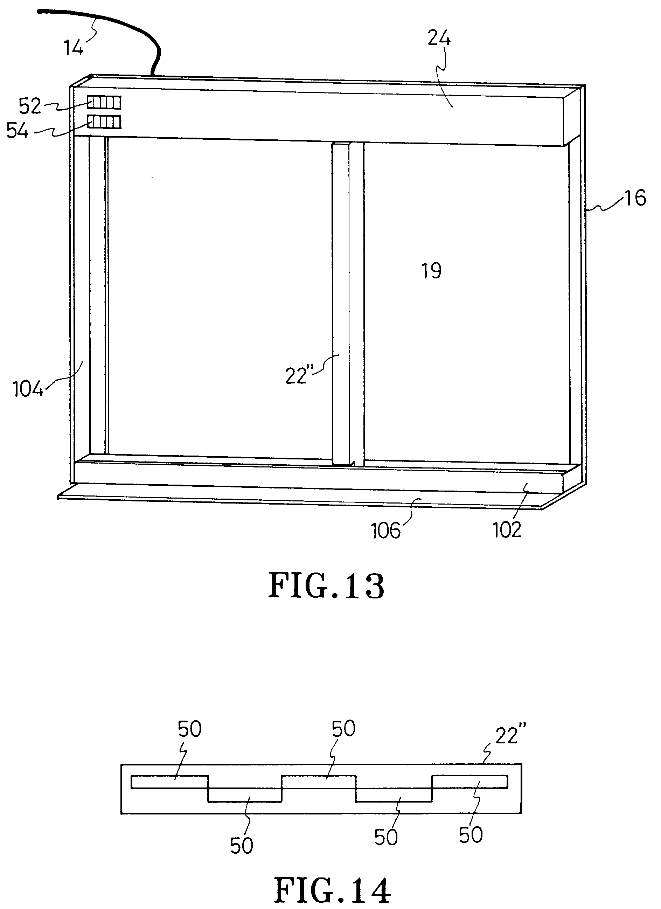

An image sensing and recording apparatus 10 according to a fifth embodiment of the present invention is shown in Figs. 12 and 13, wherein the base member 16 and image support surface 17 are configured to be supported vertically, for example, to be mounted on a wall or on an easel, and used as a white board. The apparatus 10 shown in Figs 12 and 13 include an image sensor bar 22'' and a housing 24 containing suitable electronics and transport and guide mechanisms, similar to those described above with respect to the first and second preferred embodiments, however, at a larger scale. In addition, a housing 102 is provided on the opposite side of the image support surface 17 from the housing 24 side of the surface, for housing the roller surface, guide rail or other transport or engagement mechanism. The image sensor bar 22'' preferably includes an extension portion (similar to extension portion 30 described with respect to Fig. 4) on each end of the bar, for extending into the housings 24 and 102 and for retaining the image sensor bar 22'' on the base member 16. Otherwise, the apparatus 10 shown in Figs. 12 and 13 operate similar to the apparatus 10 of the first or second preferred embodiments.

The image sensor bar 22'' may be relatively large for embodiments in which the image support surface 17 is configured for typical white-board display functions. However, it may be difficult or costly to configure an array of image sensors which can span an image support surface 17 of greater than standard page size (greater than, for example, 8.5 inches in width). Standard image sensor arrays designed to span a standard page width (for example 8.5 inches) are available from various manufacturers, but are typically not manufactured as a standard size, to span substantially greater distances. Accordingly, an image sensor bar 22'' according to one preferred arrangement, employs a plurality of standard-sized image sensor arrays 50, in a cascaded configuration, as shown in Fig. 14. In the cascaded arrangement, a plurality of sensor arrays 50 are successively arranged end-to-end, with each successive array 50 being offset in a plane perpendicular to the elongated dimension of the array with respect to the preceding array in the succession. In Fig. 14, 5 sensor arrays 50, each of standard (off-the-shelf) size, are arranged in a cascaded succession. However, other embodiments may employ any suitable number of cascaded arrays 50.

Fig. 12 shows the apparatus 10 according to the fifth embodiment, supported in a portrait mode, with the Y dimension of the image support surface 17 directed vertical. Fig. 13 shows the apparatus 10 of the fifth embodiment, supported in a landscape mode, with the Y dimension of the image support surface 17 directed horizontal. In preferred embodiments, the apparatus 10 may be provided with a ledge 104 along the lower edge of the base member 16 in Fig. 12, for holding marker pens, or the like. A further ledge 106 may be provided along housing 102, for holding marker pens or the like, when the apparatus 10 is supported in the landscape mode, as shown in Fig. 13. Both ledges 104 and 106 may be provided (as shown in Fig. 13), to allow the user to select and change between portrait and landscape modes.

In operation, a user may hand write notes (or other image information) on the upward facing writing surface 19 of a writing pad 18 supported on the image support surface 17 of the apparatus, while the image sensor bar 22 (22' or 22'') is located in the rest position. As described above, the apparatus is preferably configured to provide ready access to the image support surface for handwriting and viewing image information thereon. Alternatively, or in addition, a user may place a sheet having a pre-existing image on the writing surface 19 (or directly on the image support surface 17), with the image facing upward and in view. A handwritten or pre-existing image may be sensed and recorded by activating the image sensors on the image sensor bar 22 (22' or 22'') and moving the bar in the Y dimension, from the rest position, across the image support surface 17. Once the image sensor bar 22 (22' or 22'') has been passed over the image, the bar may be returned to the rest position.

As the image sensor bar 22 (22' or 22'') passes over the handwritten or pre-existing image, the image sensors sense the image and generate image signals representing the sensed image. The image signals are communicated to the electronics within the housing 24 (or within the image sensor bar 22'), wherein image data corresponding to the image signals is stored in the data storage device. When connected to a computer 12, the apparatus may download image signals corresponding to the stored image data from the data storage device to the computer.

The image support surface 17 (and any writing surface 19 disposed thereon) is positioned for ready access by the user for handwriting image information and viewing the handwriting image information. In addition, the image sensor bar (22, 22' or 22'') is arranged to sense image information directly on the image support surface 17 (or writing surface 19), while the image-bearing surface is in view. Moreover, preferred embodiments provide further versatility in that image-bearing documents (having pre-existing image information) may be placed on the image support surface (or writing surface) for recording in a manner similar to recording handwritten information. Thus, preferred embodiments of the present invention provide a practical, multipurpose, electronic notetaking system, apparatus and process.

Although the illustrated embodiments show an image support surface in which the length dimension is longer than the width dimension, it will be appreciated that in alternative embodiments the width dimension may be longer than the length dimension, or the width and length dimensions may be substantially the same.

The foregoing description of the preferred embodiment of the invention has been presented for the purposes of illustration and description. It is not intended to be exhaustive or to limit the invention to the precise form disclosed. Many modifications and variations are possible in light of the above teaching. It is intended that the scope of the invention be limited not by this detailed description, but rather by the claims appended hereto.

## Claims

1. A notetaking device for recording information handwritten by a user, the device comprising:
a writing pad having a writing surface for receiving and displaying handwritten images;
a base assembly having an image support surface for supporting the writing pad in a writing position, with said writing surface facing upward and positioned for ready access for handwriting and viewing by the user, the image support surface defining a width dimension and a length dimension;
an image sensor bar supported on the base assembly for movement in the length dimension of the image support surface, adjacent to the writing pad supported in said writing position, the image sensor bar defining an elongated dimension extending across at least a substantial portion of the width dimension of the support surface;
a plurality of image sensing devices disposed along the elongated dimension of said image sensor bar and directed to sense an image on the writing surface of the writing pad, width-section-by-width-section, as the image sensor bar moves adjacent to the writing surface, said image sensing devices providing image signals representative of each width section of the sensed image; and
processing electronics including data storage memory operatively coupled to said image sensing devices to receive said image signals and store data representing said image signals in said data storage memory.

2. A device as claimed in claim 1, wherein said writing pad comprises at least one sheet of paper.

3. A device as claimed in claim 1 or 2, wherein said writing pad comprises a plurality of sheets of paper, stacked one on top of another.

4. A device as claimed in claim 1, wherein said writing pad comprises a paperless, erasable marking surface.

5. A device as claimed in claim 1, wherein said writing pad comprises a stack of sheets, each sheet having an erasable marking surface and wherein at least one of said sheets includes a printed pattern comprising at least one of a set of lines, a grid, a graph and form indicia.

6. A device as claimed in any preceding claim, wherein said image support surface includes a receptacle for receiving at least one sheet of material having an image formed thereon.

7. A device as claimed in any preceding claim, wherein said data storage memory comprises at least one flash memory chip.

8. A device as claimed in any preceding claim, further comprising an output port for connection to an external processor for uploading data stored in said data storage memory to the external processor.

9. A device as claimed in any preceding claim, further comprising a housing supported by the base assembly, adjacent to one side of the image support surface and extending along at least a portion of the length dimension of the image support surface, said housing defining an interior in which said processing electronics are disposed.

10. A device as claimed in claim 9, wherein said housing has an opening extending in the length dimension of the image support surface and said image sensor bar has a first end extended into the housing interior, through said housing opening.

11. A device as claimed in claim 9 or 10, further comprising an elongated guide disposed within said housing and extending adjacent to and along the length dimension of the image support surface, said guide being engaged with the first end of the image sensor bar, for supporting and guiding said image sensor bar during said movement of the image sensor bar.

12. A device as claimed in claim 9, 10 or 11, further comprising an elongated roller guide disposed within said housing and extending adjacent to and along the length dimension of the image support surface, and a roller coupled to the first end of the image sensor bar and engaged with said roller guide for guiding said image sensor bar along said roller guide during said movement of the image sensor bar.

13. A device as claimed in any preceding claim, wherein said image support surface has two edges extending in the width dimension defining a top edge and a bottom edge of the image support surface, and wherein said image sensor bar is disposed at an initial position adjacent the top edge to expose the writing surface of the writing pad to a user for handwriting and viewing images on the writing pad and is moveable from said initial position toward the bottom edge for sensing images on the writing surface of the writing pad.

14. A device as claimed in any preceding claim, further comprising means for designating either one of said two width-dimension edges as the top edge.

15. A notetaking system for recording information handwritten by a user, the system comprising:
a host computer;
a notetaking and recording apparatus as claimed in any preceding claim; and
a communication link coupling the host computer and the notetaking and recording apparatus

16. A notetaking process for receiving and recording information handwritten by a user, the process comprising the steps of:
supporting the writing pad in a writing position on an image support surface of a base member, with a writing surface facing upward and positioned for ready access for handwriting and viewing by the user, the image support surface defining a width dimension and a length dimension;
receiving and displaying handwritten image information on the writing surface;
supporting an image sensor bar for movement on the base assembly, in the length dimension of the image support surface, the image sensor bar defining an elongated dimension extending across at least a substantial portion of the width dimension of the support surface;
moving the image sensor bar in the length dimension of the image support surface, adjacent the writing pad supported in said writing position;
sensing image information on the writing surface with a plurality of image sensing devices disposed along the elongated dimension of said image sensor bar, width-section-by-width-section of the writing surface, as the image sensor bar moves adjacent to the writing surface;
providing image signals from the image sensor devices, representing each width section of the sensed image; and
storing data representing said image signals in a data storage memory.
